# EUROPÄISCHE PATENTSCHRIFT

(11) **EP 1 990 393 B1**
(45) Veröffentlichungstag und Bekanntmachung des Hinweises auf die Patenterteilung: **15.05.2013**
(21) Anmeldenummer: 08152261.7
(22) Anmeldetag: 04.03.2008
(51) Int. Cl.: C09J 7/04, D04H 3/04

(54) **Handeinreißbares Gewebe-Klebeband**
Hand-tearable fabric-adhesive tape
Bande adhésive en tissu pouvant être déchirée à la main

(30) Priorität: 11.05.2007 DE 202007006816 U
(43) Veröffentlichungstag der Anmeldung: 12.11.2008
(73) Patentinhaber: Coroplast Fritz Müller GmbH & Co. KG, 42279 Wuppertal (DE)
(72) Erfinder: Lodde, Christoph, 44229, Dortmund (DE); Frigge, Christoph, 45549, Sprockhövel (DE); Wittig, Gülay, 44799, Bochum (DE)
(74) Vertreter: Patentanwälte Dr. Solf & Zapf

(56) Entgegenhaltungen:
- EP-A1- 0 052 845
- EP-A1- 1 072 704
- EP-A1- 1 553 220
- EP-A2- 0 199 239
- WO-A1-03/018278
- WO-A1-2005/019023
- DE-B- 1 193 198
- US-A- 2 918 346
- US-A- 4 052 866
- US-A- 4 064 306
- US-A- 4 945 848
- US-A- 5 577 956
- US-A1- 2006 059 954
- US-A1- 2006 063 455
- US-B1- 6 790 505
- 1. Januar 1900 (1900-01-01), WPI WORLD PATENT INF, , XP002135622 * Zusammenfassung * -& JP 62 028436 A (ASAHI CHEMICAL IND) 6. Februar 1987 (1987-02-06)
- 1. Januar 1900 (1900-01-01), WPI WORLD PATENT INF, , XP002135623 * Zusammenfassung * -& JP 02 208385 A (ASAHI CHEMICAL IND) 17. August 1990 (1990-08-17)
- "tex" RÖMPP ONLINE, [Online] Nr. 20-01062, Mai 2005 (2005-05), XP002483515 Gefunden im Internet: URL:http://www.roempp.com/prod/index1.html > [gefunden am 2008-06-09]
- SVEN DONALDSON: 'Why Nylon Still Rules the Run', [Online] 30 Dezember 2002, Seiten 1 - 3 Sailing World Gefunden im Internet: <URL:http://www.sailingworld.com/gear/why-n ylon-still-rules-the-run> [gefunden am 2012-11-22]
- Brian Hancock: "Maximum Sail Power - The Complete Guide to Sails, Sail Technology and Performance", 2003, Nomad Press, Norwich ISBN: 0-9722026-0-9 pages 13-50, * page 27 *

## Beschreibung

Die vorliegende Erfindung betrifft ein handeinreißbares Gewebe-Klebeband nach dem Oberbegriff des Anspruchs 1, insbesondere ein Kabelwickelband, umfassend einen bandförmigen Träger und mindestens eine auf einer Seite des Trägers aufgetragene Klebeschicht, wobei der Träger aus einem Gewebe besteht, welches überwiegend Fäden enthält, die sich einerseits als Längsfäden in Längsrichtung des Klebebandes und andererseits als Querfäden mit einer Fadendichte von wenigstens 18 Fäden pro Zentimeter Länge in Querrichtung des Klebebandes erstrecken, wobei ein auf die Breite bezogener Titer der Längsfäden kleiner ist als ein auf die Länge bezogener Titer der Querfäden.

Im Automobilbereich werden Kabelsätze oftmals mit Klebebändern umwickelt, wobei vor allem textile Klebebänder neben der reinen Bündelungsfunktion mittlerweile zahlreiche Zusatzfunktionen, wie den Schutz der Leitungen vor Abrieb oder die Dämpfung von Klapper- oder Vibrationsgeräuschen, übernommen haben. Weit verbreitet ist dabei der Einsatz sowohl von Gewebeklebebändern als auch von verschiedenartigen Vliesklebebändern.

Für technische, auf sich selbst wickelbare textile Klebebänder ist auch der Einsatz von verschiedenartigen Materialien als Träger bekannt. Solche Materialien sind beispielsweise Zellwolle und Polyester für Gewebe und für Vliese, wie Nähvliese, Nadelvliese mit einseitiger Kalandrierung sowie Vliese mit einer Antihaftbeschichtung, Polyamid, Polyester oder Polypropylen. Zellwoll-Gewebe-Klebebänder haben den Nachteil, dass sie auf Grund des Gewebes teuer und verrottbar sind. Bei

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind.

Hinsichtlich der Abriebbeständigkeit ist in der LV 312 die in der nachstehenden Tabelle 1 wiedergegebene Klassifizierung vorgesehen.

**Tabelle 1: Einteilung der Abriebklassen nach LV 312**

| Abriebklasse | Anforderung (Anzahl Hübe) |
|---|---|
| A - kein Abriebschutz | < 100 |
| B - geringer Abriebschutz | 100 - 499 |
| C - mittlerer Abriebschutz | 500 - 999 |
| D - hoher Abriebschutz | 1000 - 4999 |
| E - sehr hoher Abriebschutz | 5000 und mehr |

Als weitere anwendungstechnisch wichtige Prüfungen sind in der genannten Richtlinie beispielsweise auch Prüfmethoden für thermische Beständigkeit, die Kompatibilität von Klebebändern mit elektrischen Fahrzeugleitungen sowie für die Chemikalienbeständigkeit, das Geräuschdämpfungsverhalten und das Fogging-Verhalten beschrieben.

Eine weitere, insbesondere im Hinblick auf die Verarbeitbarkeit wichtige Größe ist die Handeinreißbarkeit eines Klebebandes. So beschreibt die DE 699 02 802 T2 Laminat-Verbundmaterialien, die leicht sowohl in Längsrichtung (Maschinenrichtung) als auch in Querrichtung von Hand zerreißbar sind, und ein Verfahren zum Herstellen solcher Laminat-Verbundmaterialien. Der bekannte Laminat-Verbundkörper, der in Maschinenrichtung und Querrichtung von Hand zerreißbar ist, umfasst dabei eine Faservlieslagenschicht, eine der Faservlieslagenschicht benachbarte Grobgewebeschicht mit beabstandet angeordneten, im Wesentlichen in Maschinenrichtung ausgerichteten Fäden, die im Wesentlichen rechtwinklig zu beabstandet abstandet angeordneten, im Wesentlichen in Querrichtung ausgerichteten Fäden verlaufen, und ein Bindemittel sowohl in der Faservlieslagenschicht als auch in der Grobgewebeschicht.

Diesem bekannten hochabriebfesten Klebeband ist mit ähnlichen anderen Klebebändern gemeinsam, dass sie Verbundmaterialien mit einer Velours- oder Vlieslage im Trägermaterial darstellen, womit eine entsprechend hohe Banddicke, insbesondere eine Dicke von mehr als 0,8 mm, verbunden ist. Außerdem sind diese bekannten Bänder nicht maschinell verarbeitbar und zeigen am Kabelsatz ein Flagging, d. h. eine endseitige Auffaserung, so dass ihre Enden jeweils beim Einsatz fixiert werden müssen, was sich nachteilig auf die Verarbeitungszeit auswirkt. So ergeben sich nachteiligerweise neben der hohen Banddicke auch hohe Verarbeitungszeiten. Demgegenüber ist mit Klebebändern, die nicht als Verbundmaterial aufgebaut sind und die daher eine geringere Dicke, insbesondere eine Dicke von weniger als 0,5 mm, aufweisen, wie mit bekannten Gewebeklebebändern auf Zellwoll- oder PET-Basis, keine hohe Abriebfestigkeit erzielbar.

Dieses Problem ist beispielsweise in der EP-B-1 074 595, welche auch ein bekanntes Klebeband der eingangs genannten Art beschreibt, aufgezeigt. Dort ist insbesondere durch die Tabelle 1 veranschaulicht, dass Bänder mit einem Träger aus Viskose- oder Baumwollgewebe oder auch aus Vlies eine gute Handeinreißbarkeit, aber einen geringen Abrasionswiderstand aufweisen, während es sich bei Bändern mit einem Polyesterträger umgekehrt verhält. Das aus der EP-B-1 074 595 bekannte Klebeband enthält, um dieses grundsätzliche Problem zu überwinden, einen gewebten Träger aus Fäden, die wenigstens maßgeblich aus Polyesterfasern bestehen, von denen die einen sich in Längsrichtung des Bandes und die anderen sich quer dazu erstrecken, und eine Klebstoffschicht, die wenigstens eine Seite des Trägers bedeckt.

Der Titer der Längsfäden pro Breiteneinheit des Bandes ist kleiner als der Titer der Querfäden pro Längeneinheit des Bandes und beträgt höchstens 2500 dtex/cm.

Der Träger weist zwischen 30 und 50 Längsfäden pro Zentimeter Breite und zwischen 18 und 27 Querfäden pro Zentimeter Länge auf, wobei die Längsfäden in Querrichtung durch den Klebstoff an ihrem Platz festgelegt sind, so dass das Band eine Reißfestigkeit in Querrichtung von weniger als 10 N erhält. Die Reißfestigkeit in Querrichtung von weniger als 10 N, welche nach der AFERA-Norm 4007 bestimmt wird, wird als Kriterium für die Handeinreißbarkeit des Bandes angesehen. Der Titer der Querfäden pro Längeneinheit des bekannten Bandes liegt zwischen 3000 und 4500 dtex/cm. Der Titer der Längsfäden liegt zwischen etwa 40 und etwa 60 dtex und der Titer der Querfäden zwischen 150 und 250 dtex. Das bekannte Klebeband bietet zwar eine grundsätzliche, jedoch noch verbesserungsbedürftige technische Lösung für die Kombination von Abriebfestigkeit und Handeinreißbarkeit an, insofern für das bekannte Band eine weitere Erhöhung des Abriebwiderstandes erstrebenswert ist und weitere technische Zielgrößen, wie Flagging, Flexibilität, maschinelle Verarbeitbarkeit und Schmiegsamkeit gleichzeitig ebenfalls Beachtung finden sollten.

Der vorliegenden Erfindung liegt die Aufgabe zu Grunde, ein Klebeband der eingangs genannten Art zu schaffen, das sowohl manuell, als auch maschinell leicht verarbeitbar ist, das handeinreißbar ist, aber eine hohe Verbundfestigkeit und eine verbesserte Abriebfestigkeit aufweist, das bei Vorhandensein eines verrottungsfesten Trägers schmiegsam und flexibel ist und eine hohe Klebkraft aufweist. Was die Überwindung der genannten Nachteile des bekannten Standes der Technik betrifft, so soll dabei ein erfindungsgemäßes Klebeband insbesondere bei einer - zumindest in Querrichtung gegebenen - guten Handeinreißbarkeit einen Abriebwiderstand mindestens der Klasse C erreichen.

Diese Aufgabe wird mit einem Klebeband der eingangs genannten Art mit den Merkmalen des Anspruchs 1 gelöst, bei dem der auf die Breite des Bandes bezogene Titer der Längsfäden mindestens 2600 dtex/cm, der auf die Länge des Bandes bezogene Titer der Querfäden mindestens 4700 dtex/cm und die Fadendichte der Querfäden mindestens 28 Fäden pro Zentimeter Länge beträgt, wobei die Längsfäden und die Querfäden außer durch die Klebeschicht zusätzlich gegen eine Verschiebung relativ zueinander fixiert sind.

Überraschenderweise wurde gefunden, dass außerhalb der aus der EP-B-1 074 595 bekannten Grenze von 2500 dtex/cm für den Titer der Querfäden pro Längeneinheit des Bandes und außerhalb der Grenze von 2500 dtex/cm Titer der Querfäden pro Längeneinheit des Bandes bei Gewährleistung einer guten Handeinreißbarkeit eine erhöhte Abriebbeständigkeit erzielt werden kann, wenn die Fadendichte der Querfäden mindestens 28 Fäden pro Zentimeter Länge beträgt, wenn die Längsfäden und die Querfäden außer durch die Klebeschicht zusätzlich gegen eine Verschiebung relativ zueinander fixiert sind. Dabei ist es möglich, dass die Fäden aus Polyester, Polyamid, Zellwolle und/oder Acetatseide bestehen. Erfindungsgemäß bevorzugt ist allerdings, dass der Träger vollständig aus Polyester, insbesondere aus Polyethylenterephtalat (PET), besteht. Die Fadendichte der Längsfäden kann dabei insbesondere - wie bekannt - bei 30 bis 50 Fäden pro Zentimeter Breite liegen.

Für die zusätzliche relative Fixierung der Fäden zueinander gibt es mehrere Möglichkeiten.

So kann diese Fixierung beispielsweise durch ein Kalandrieren erreicht werden.

Neben oder alternativ zu der Kalandrierung kann auch eine Vorfixierung der Fäden durch eine Appretur des Trägers - nach der Art einer Verwendung von sogenannter Bügelsteife für Kleidungsstücke - bei der Textilausrüstung, insbesondere in einem Waschvorgang mit anschließender thermischer Behandlung, vorgenommen werden. Hierbei können Appreturmittel auf der Basis von Polyvinylalkohol, Acrylat und/oder Polyamid Verwendung finden. Durch die sich an den Waschvorgang anschließende thermische Behandlung findet dann durch das Appreturmittel ein Verkleben bzw. die Vorfixierung der Fäden des Trägers statt. Diese Vorfixierung unterstützt später eine leichtere Quereinreißbarkeit des erfindungsgemäßen Klebebandes.

In bevorzugter Ausführung der Erfindung ist jedoch - ebenfalls alternativ oder zusätzlich zu den anderen Möglichkeiten der Fixierung - vorgesehen, dass die Fäden gegen eine Verschiebung durch den Einsatz von texturierten Garnen als Längsfäden und/oder Querfäden relativ zueinander fixiert sind.

Mit Texturieren bezeichnet man in der Textilindustrie einen Vorgang, durch den Chemiefasern dauerhaft gekräuselt werden. Die glatten synthetischen Fäden erhalten durch diese Veredelung einen naturfaserähnlichen Charakter und einen textilen Griff. Das Texturieren geschieht meist unter dem Einfluss von Hitze und Druck, wobei eine Thermoplastizität der Fasern ausgenutzt wird.

Texturierte Garne werden bekanntermaßen zur Herstellung von Bekleidung eingesetzt, da die vor dem Texturieren glatten Synthesefasern ein unangenehmes Gefühl auf der Haut hervorrufen können. Die Kleidungsstücke fühlen sich kalt und seifig an und kleben beim Schwitzen auf der Haut, da sie kein Wasser aufsaugen. Durch die Kräuselung der Fasern bei der Texturierung werden Faserschlingen erzeugt, die zwischen Haut und Kleidung liegen. Es kommt so zu einer Volumenzunahme und daher zu einem erhöhten Lufteinschluss und zu einer verbesserten Wärmehaltung sowie Feuchtigkeitsaufnahmefähigkeit. Die elastische Dehnbarkeit steigt an, während sich die Wärmeleitfähigkeit vermindert.

Im Zusammenhang mit der Erfindung wird jedoch insbesondere der Effekt genutzt, dass die Texturierung der Fäden das Gewebe stabilisiert, d. h. eine relative Verschiebung der Fäden zueinander behindert. Dies ist für die Handeinreißbarkeit des Trägers von Bedeutung. Eine Fixierung der Fäden eines für sich allein nicht handeinreißbaren Trägers wird zwar schon - gewissermaßen zwangsläufig - durch die Klebebeschichtung erreicht, jedoch ist das in der Regel nicht ausreichend. Dies ist auf die Tatsache zurückzuführen, dass die Klebebeschichtung aufgrund des üblichen Einsatzes von Klebern mit erhöhter Kohäsion mehr auf dem Träger aufliegt, als in ihn eindringt. Die Fixierungswirkung ist daher für die Erzielung einer ausreichenden Stabilisierung der Relativlage der Fäden zueinander zu gering.

Zur Durchführung des Texturierens sind verschiedene, insbesondere mechanische, mechanisch-thermische und chemisch-thermische Verfahren bekannt. So wird bei dem sogenannten Falschdrahtverfahren ein Faden mit bis zu 1000 Drehungen/m verdrillt und heiß fixiert. Nach dem Zurückdrehen bleibt in den einzelnen Filamenten eine fixierte Spiralstruktur erhalten. Bei der Stauchkräuselung wird ein Faserverbund durch beheizte Walzen in eine Kammer mit keilförmig angeordneten Wänden gepresst und dadurch gestaucht und gekräuselt, wobei die Kräuselung durch die Kammerheizung fixiert wird. Bei der Blastexturierung wird ein Filamentgarn durch eine Düse geführt, durch die gleichzeitig Druckluft gepresst wird. Beim Austritt aus der Düse verwirbelt die Luft, löst das Garn dadurch teilweise in seine Einzelfilamente auf und verschlauft sie danach wieder, wonach in einer Fixierzone eine abschließende Stabilisierung erfolgt, die auch mit einer Verfestigung und Schrumpfung verbunden ist.

Eine weitere mögliche Methode zur Fixierung der Fäden zueinander stellt auch der Einsatz eines Garns für die Fäden dar, das durch ein sogenanntes Intermingeln oder Interlacing hergestellt wird. Das Intermingeln ist eine Zusatzausrüstung der Fäden, bei der die Fäden durch eine Verwirbelung mit Luft punktuell verflochten werden. Bei dem genannten Verfahren wird der Zusammenhalt der einzelnen Filamente nicht durch ein Verdrehen, sondern durch eine Verschlingung der Filamente erreicht. Das Intermingeln kann mit glatten Fäden durchgeführt werden, es ist aber auch möglich und erfindungsgemäß bevorzugt, ein Intermingeln im direkten Anschluss an ein Texturieren der Fäden durchzuführen.

Neben der Handeinreißbarkeit in Querrichtung und der Erfüllung der Forderungen für die Einordnung in Klasse C für die Abriebbeständigkeit nach LV 312 ist das erfindungsgemäße Klebeband sowohl manuell als auch maschinell leicht verarbeitbar, ist verrottungsfest sowie sehr schmiegsam und flexibel und weist eine hohe Verbundfestigkeit, hierbei insbesondere kein Flagging, und eine hohe Klebkraft auf. Die Reißfestigkeit in Längsrichtung kann dabei bei 50 bis 110 N/cm, insbesondere im Bereich von 68 bis 86 N/cm, und die Klebkraft auf Stahl im Bereich von 2 bis 12 N/cm, vorzugsweise im Bereich von 10 bis 11 N/cm sowie auf dem Bandrücken im Bereich von 2 bis 12 N/cm, vorzugsweise im Bereich von 6 bis 7 N/cm liegen. Trotz der Abwesenheit von Velour- oder Vliesschichten im Träger ist es mit dem erfindungsgemäßen Fadenaufbau vorteilhafterweise mit vergleichsweise geringem Fertigungsaufwand möglich, ein Klebeband, insbesondere ein Kabelwickelband, mit geringer Dicke, insbesondere mit einer Dicke von 0,13 bis 0,21 mm, und mittlerer bis hoher Abriebfestigkeit herzustellen.

Das erfindungsgemäße Klebeband kann ohne Verwendung eines Interliners auf sich selbst zu einer Rolle und davon wieder heruntergewickelt werden, ohne dass es dabei zu einem Herausziehen der Fasern käme.

In einer bevorzugten Ausführung des erfindungsgemäßen Klebebandes kann vorgesehen sein, den Bandrücken, also die Oberseite, des Trägers mit einer Acrylatschicht zu versiegeln, wodurch an den Fäden vorhandene Kräuselungen noch zusätzlich fixiert werden können. Dadurch wird die Beständigkeit des Trägers gegen Faserausrisse und -delamination noch weiter erhöht.

Des Weiteren kann in einer bevorzugten Ausführung des erfindungsgemäßen Klebebandes vorgesehen sein, dass der Träger durch eine Kalandrierung verfestigt ist. Hierdurch kann insbesondere erreicht werden, dass das erfindungsgemäße Klebeband eine elektrische Mindestdurchschlagfestigkeit von mehr als 1000 V aufweist.

In Tabelle 2 sind Basisdaten eines erfindungsgemäßen Kabelwickelbandes und eines erfindungsgemäßen rückseitenbeschichteten Klebebandes mit ihren - in Klammern angegebenen - möglichen bzw. jeweilig bevorzugten Variationsbereichen aufgeführt. Die Ermittlung der angegebenen technischen Parameter erfolgt dabei nach den jeweils üblichen Normen: EN ISO 2286-1 für das spezifische Gewicht des Trägers 1, DIN EN 1942 für die Dicke D, DIN EN 14410 für die mechanischen Werte und DIN EN 1939 für die Klebkraft des Klebebandes und DIN EN 1944 für die Abrollkraft. Das Flaggingverhalten und die Abriebbeständigkeit werden nach LV 312 bestimmt.

**Tabelle 2: Basisdaten eines erfindungsgemäßen, per Hand quereinreißbaren Kabelwickelbandes (I) sowie eines erfindungsgemäßen Bandes, dessen Rücken mit einer Acrylatbeschichtung versehen ist (II)**

| Eigenschaft | Einheit | I | II |
|---|---|---|---|
| Banddicke D | mm | 0,16 - 0,18 | 0,18 - 0,19 |
| Mechanische | | | |
| Werte Reißdehnung | % | 18 - 24 | 15 - 25 |
| Bruchkraft | N/cm | 68 - 86 | 65 - 105 |
| Klebkraft | | | |
| auf Stahl | N/cm | 10 - 11 | 3,5 - 9,0 |
| auf Bandrücken | N/cm | 6 - 7 | 2,5 - 6,0 |
| Abrollkraft | N/19 mm | 4 - 5 | 3 - 7 |
| Flagging | - | nein | Nein |
| 30 min und 24 h | | | |
| Abrieb | | | |
| mit 5-mm-Dorn | Hübe | 100 - 499 | 100 - 600 |
| mit 10-mm-Dorn | | (KI. B) | (Klassen B/C) |
| | Hübe | 600 - 800 | 700 - 900 |
| | | (Klasse C) | (Klasse C) |

Weitere vorteilhafte Ausführungen der Erfindung sind in den Unteransprüchen und der nachfolgenden speziellen Beschreibung enthalten. Anhand eines Ausführungsbeispiels wird unter Bezugnahme auf die Zeichnung die Erfindung näher erläutert. Dabei zeigen:
- Fig. 1: eine schematisierte perspektivische Darstellung eines quer und längs geschnittenen erfindungsgemäßen Klebebandes,
- Fig. 2 bis 6: schematisierte Darstellungen von verschieden texturierten Fäden.

In den verschiedenen Figuren der Zeichnung sind gleiche Teile stets auch mit den gleichen Bezugszeichen versehen, so dass sie in der Regel auch jeweils nur einmal beschrieben werden.

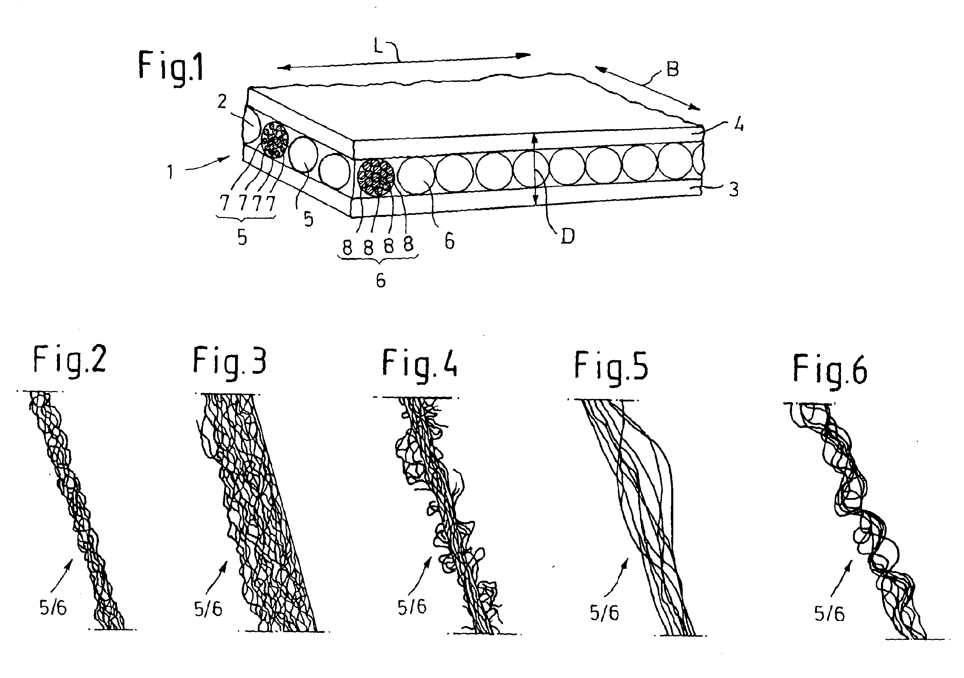

Wie zunächst aus Fig. 1 hervorgeht, weist ein erfindungsgemäßes technisches handeinreißbares Gewebe-Klebeband (Band 1), insbesondere ein Kabelwickelband, einen bandförmigen Träger 2 auf, auf den einseitig - in der zeichnerischen Darstellung auf der Unterseite - als eine insbesondere druckempfindliche Klebebeschichtung eine Klebeschicht 3 aufgetragen ist.

Die Klebeschicht 3 kann insbesondere mit einem spezifischen Flächengewicht von etwa 30 bis 100 g/m², vorzugsweise von etwa 40 bis 70 g/m², aufgetragen sein, um einerseits geringe Abrollkräfte, andererseits aber auch die bei der spiralförmigen Bewicklung von Kabelsätzen erforderlichen Haftwerte zu erreichen.

Anderseitig - auf der Oberseite - ist das Klebeband 1 mit einer - jedoch nur optional vorhandenen - Beschichtung bzw. Siegelschicht 4 bedeckt, die mit Vorteil aus einem Polyacrylat gebildet sein kann. Das Klebeband 1 weist eine Länge L, eine Breite B und eine Banddicke D auf.

Der Träger 2 besteht aus einem Gewebe, welches ausschließlich Fäden 5, 6 aus Polyester, insbesondere aus Polyethylenterephtalat (PET), enthält, wobei es jedoch auch möglich wäre, einen geringeren Anteil (weniger als 50 Prozent) der Fäden 5, 6 aus einem anderen Material herzustellen. Die Fäden 5, 6 erstrecken sich einerseits als Längsfäden 5 mit einer Fadendichte im Bereich zwischen 30 und 50 Fäden pro Zentimeter Breite B in Längsrichtung des Bandes 1 und andererseits als Querfäden 6 mit einer Fadendichte von wenigstens 18 Fäden pro Zentimeter Länge L in Querrichtung des Bandes 1. Bei den Längsfäden 5 handelt es sich insbesondere um Kettfäden und bei den Querfäden um Schussfäden des Gewebes.

Ein auf die Breite B des Bandes bezogener Titer der Längsfäden 5 des Bandes 1 ist kleiner als ein auf die Länge L des Bandes 1 bezogener Titer der Querfäden 6. Insbesondere ist erfindungsgemäß vorgesehen, dass der auf die Breite B des Bandes 1 bezogene Titer der Längsfäden 5 mindestens 2600 dtex/cm und der auf die Länge L des Bandes 1 bezogene Titer der Querfäden 6 mindestens 4700 dtex/cm beträgt. Die Fadendichte der Querfäden 6 beträgt mindestens 28, vorzugsweise mindestens 30 Fäden, pro Zentimeter Länge L. Die Fäden 5, 6 sind dabei teilweise glatte Fäden 5, 6 und teilweise texturierte Fäden 5, 6, wobei für Letztere verschiedene mögliche Texturierungen in Fig. 2 bis 6 gezeigt sind.

Was die Klebebeschichtung 3 betrifft, so werden bevorzugt druckempfindliche Haftklebstoffe eingesetzt, insbesondere UV-vernetzbare Acrylatsysteme, aber auch Synthesekautschukklebstoffe. Klebebänder mit Acrylatklebstoffen zeichnen sich durch niedrige Foggingwerte, eine hohe Resistenz gegen verschiedene Chemikalieneinflüsse und durch eine ausgezeichnete Kompatibilität mit verschiedenartigen Leitungen aus.

Generell kann mit Vorteil die Stärke der Querfäden 6 mindestens 150 dtex, vorzugsweise 160 bis 180 dtex, betragen. Die Stärke der Längsfäden 5 kann mindestens 65 dtex, vorzugsweise 80 bis 100 dtex, betragen. Das Gewebe des Trägers 2 kann bevorzugt ein Flächengewicht im Bereich vom 70 bis 100 g/m², vorzugsweise von 73 bis 77 g/m², aufweisen.

Die Gewebekonstruktion und die Beschreibung des Fasermaterials des bevorzugten Beispiels des erfindungsgemäßen Klebebandes 1 gehen im Einzelnen aus Tabelle 3 hervor. Das Klebeband 1 mit dem gemäß Tabelle 3 erfindungsgemäß hergestellten Träger 2 wies dabei Basisdaten im Bereich der in Tabelle 2 dargestellten Wertebereiche auf.

**Tabelle 3: Gewebekonstruktion eines erfindungsgemäßen, per Hand quereinreißbaren Kabelwickelbandes (I) sowie eines erfindungsgemäßen Bandes, dessen Rücken mit einer Acrylatbeschichtung versehen ist (II)**

| Parameter | Einheit | I | II |
|---|---|---|---|
| Trägermaterial | | Polyester- | Polyester- |
| | | gewebe | gewebe |
| Faserart | | 100 % | 100 % |
| | | Polyester | Polyester |
| Flächengewicht | g/m² | 70 | 120 |
| Beschichtung 4 | g/m² | 0 | 50 - 55 |
| | | | Acrylat |
| Kettfäden | | | |
| - Anzahl | 1/cm | 32 | 32 |
| - Garnart | | glatt | glatt |
| - Filamentanzahl | Stück | 24 | 24 |
| - Faserstärke | dtex | 84 | 84 |
| - Breitenbezogene | dtex/cm | > 2500 | > 2500 |
| Fadenstärke | | (2613) | (2613) |
| Schussfäden | | | |
| - Anzahl | 1/cm | 30 | 30 |
| - Garnart | | texturiert | glatt |
| - Filamentanzahl | Stück | 36 | 36 |
| - Faserstärke | dtex | 167 | 167 |
| - Längenbezogene | dtex/cm | > 4500 | > 4500 |
| Fadenstärke | | (5200) | (5200) |

Wie Tabelle 3 und Fig. 1 zeigen, kann es sich bei den Fäden 5, 6 bevorzugt um Multifilamentfäden handeln, wobei insbesondere Längsfäden 5 und Querfäden 6 mit unterschiedlicher Filamentanzahl miteinander kombiniert sind. So kann insbesondere vorgesehen sein, dass die Längsfäden 5 aus 16 bis 32 Filamenten 7 pro Faden 5, vorzugsweise aus 22 bis 26 Filamenten 7 pro Faden 5, und die Querfäden 6 aus 28 bis 44 Filamenten 8 pro Faden 6, vorzugsweise aus 34 aus 38 Filamenten 8 pro Faden 6, bestehen.

Im Hinblick auf die erfindungsgemäß vorgesehene Texturierung ist es grundsätzlich möglich, dass die Längsfäden 5 glatt und die Querfäden 6 texturiert sind oder dass die Querfäden 6 glatt und die Längsfäden 5 texturiert sind oder dass sowohl jeweils ein Teil der Längsfäden 5 und/oder Querfäden 6 glatt und ein anderer Teil jeweils texturiert ist.

Wie bereits erwähnt, zeigen Fig. 2 bis 6 schematisierte Darstellungen von verschieden texturierten Fäden 5,6, die in Anlehnung an die einschlägige Norm DIN 60900-5 erstellt wurden und mögliche Ausführungen der Kräuselung zeigen. Hierbei handelt es sich im Einzelnen in Fig. 2 um einen unter Einsatz der Falschdrahttexturierung, wie diese bereits oben erwähnt wurde, gekräuselten Faden 5, 6, in Fig. 3 um einen unter Einsatz der Stauchkräuselung - ebenfalls oben bereits erwähnt - gekräuselten Faden 5, 6, in Fig. 4 um einen unter Einsatz eines Blasverfahrens, wie dies oben erwähnt wurde, gekräuselten Faden 5, 6, in Fig. 5 um einen unter Einsatz eines chemisch-thermischen Verfahrens Bikomponenten- oder matrixgesponnenen gekräuselten Faden 5, 6 und in Fig. 6 um einen unter Einsatz eines mechanisch-thermischen Verfahrens gekräuselten Faden 5, 6, der als so genanntes Kantenkräuselgarn bezeichnet wird.

Während es durch Wahl einer bestimmten Filamentanzahl in einem Faden 5, 6 vorteilhafterweise möglich ist, die Fadenstärke zu variieren, bietet die Texturierung den Vorteil, bei gleicher nomineller Fadenstärke die Fadeneigenschaften, wie beispielsweise das Fadenvolumen oder die Reißfestigkeit des Fadens 5, 6 zu variieren und gezielt einzustellen. Hierbei hat es sich für ein Polyestergewebe als besonders günstig erwiesen, wenn bei Einsatz texturierter Längsfäden 5 und/oder Querfäden 6 diese Fäden 5, 6 zusätzlich intermingelt sind. Der Intermingelungsgrad kann dabei bevorzugt im Bereich von 10 bis 300 Intermingelungspunkten pro laufenden Meter, insbesondere im Bereich von 80 bis 100 Intermingelungspunkten pro laufenden Meter, liegen.

Die Beispielausführung zeigt, dass ein erfindungsgemäßes Klebeband eine zur Bewicklung von Kabelsätzen ausreichende Verbundfestigkeit, Zugfestigkeit und Haftung auf dem Bandrücken aufweist. Durch seinen speziellen Aufbau verbindet sich dabei bei dem erfindungsgemäßen Klebeband die positive Eigenschaft einer insbesondere in Querrichtung leichten Handeinreißbarkeit mit einem geringen Herstellungsaufwand und mit einem erhöhten Abriebwiderstand.

Die Erfindung ist nicht auf die dargestellten Ausführungsbeispiele beschränkt, sondern umfasst auch alle im Sinne der Erfindung gleichwirkenden Ausführungen. So können neben Trägern 2, die im Materialaufbau homogen sind, d. h. aus einem einheitlichen Fasermaterial bestehen, bedarfsweise auch Träger 2 hergestellt werden, bei denen die einzelnen Fäden 5, 6 aus hinsichtlich der Faserbeschaffenheit unterschiedlichen Materialien bestehen.

Es wurde bereits erwähnt, dass der Träger auch optional zusätzlich durch eine Kalandrierung verfestigt werden kann, ohne dass der Rahmen der Erfindung verlassen wird. Das Kalandrieren bewirkt eine zusätzliche Verklebung bzw. partielle Fixierung der Kett- und Schussfäden, bzw. der Längs- und Querfäden, die nach einer Beschichtung mit einem Klebstoff eine bessere Quereinreißbarkeit des erfindungsgemäßen Klebebandes unterstützt.

Die Klebebanddicke D kann - abweichend von den in Tabelle 2 angegebenen Werten - im Bereich von 0,13 bis 0,25 mm, insbesondere im Bereich von 0,16 bis 0,22 mm liegen. Auch für die Bruchkraft kann der mögliche Bereich größer sein als in Tabelle 2 angegeben und etwa 50 bis 110 N/cm betragen. Was die Klebkraft betrifft, so kann vorgesehen sein, dass diese auf dem Bandrücken im Bereich von 2 bis 12 N/cm, vorzugsweise von 4 bis 7 N/cm, und auf Stahl im Bereich von 2 bis 12, vorzugsweise von 5 bis 11 N/cm, liegt. Die Abrollkraft kann im Bereich von 2 bis 10 N / 19 mm, vorzugsweise von 3 bis 7 N / 19 mm, liegen.

Die Verwendung eines erfindungsgemäßen Klebebandes beschränkt sich nicht auf die Bewicklung von Kabelsätzen. Vielmehr ist ein solches auf Grund der beschriebenen optimalen Eigenschaftskombination auch für andere technische Einsatzzwecke geeignet.

### Bezugszeichen

- 1: Klebeband
- 2: Träger
- 3: Klebstoffbeschichtung
- 4: Siegelschicht
- 5: Längsfaden
- 6: Querfaden
- 7: Filament von 5
- 8: Filament von 6

- B: Breite von 1
- D: Dicke von 1
- L: Länge von 1

## Patentansprüche

1. Handeinreißbares Gewebe-Klebeband (1), insbesondere Kabelwickelband, umfassend einen bandförmigen Träger (2) und mindestens eine auf einer Seite des Trägers (2) aufgetragene Klebeschicht (3), wobei der Träger (2) aus einem Gewebe besteht, welches überwiegend Fäden (5, 6) enthält, die sich einerseits als Längsfäden (5) mit einer Fadendichte im Bereich zwischen 30 und 50 Fäden pro Zentimeter Breite (B) in Längsrichtung des Klebebandes (1) und andererseits als Querfäden (6) mit einer Fadendichte von wenigstens 18 Fäden pro Zentimeter Länge (L) und einer Stärke von mindestens 150 dtex in Querrichtung des Klebebandes (1) erstrecken, wobei ein auf die Breite (B) bezogener Titer der Längsfäden (5) kleiner ist als ein auf die Länge (L) bezogener Titer der Querfäden (6),
**dadurch gekennzeichnet, dass** der auf die Breite (B) bezogene Titer der Längsfäden (5) mindestens 2600 dtex/cm, der auf die Länge (L) bezogene Titer der Querfäden (6) mindestens 4700 dtex/cm und die Fadendichte der Querfäden (6) mindestens 28 Fäden (6) pro Zentimeter Länge (L) beträgt, wobei die Längsfäden (5) eine Stärke von mindestens 65 dtex aufweisen und die Längsfäden (5) und die Querfäden (6) außer durch die Klebeschicht (3) zusätzlich gegen eine Verschiebung relativ zueinander fixiert sind.

2. Klebeband (1) nach Anspruch 1,
**dadurch gekennzeichnet, dass** die Fäden (5, 6) gegen eine Verschiebung durch den Einsatz von texturierten Garnen als Längsfäden (5) und/oder Querfäden (6) relativ zueinander fixiert sind.

3. Klebeband (1) nach Anspruch 1 oder 2,
**dadurch gekennzeichnet, dass** die Fäden (5, 6) gegen eine Verschiebung durch eine Kalandrierung des Trägers (2) relativ zueinander fixiert sind.

4. Klebeband (1) nach einem der Ansprüche 1 bis 3,
**dadurch gekennzeichnet, dass** die Fäden (5,6) gegen eine Verschiebung durch eine zusätzliche Acrylat- oder Polyurethanbeschichtung des Trägers (2) relativ zueinander fixiert sind.

5. Klebeband (1) nach einem der Ansprüche 1 bis 4,
**dadurch gekennzeichnet, dass** die Fäden (5, 6) gegen eine Verschiebung durch eine Appretur des Trägers (2) relativ zueinander fixiert sind.

6. Klebeband (1) nach einem der Ansprüche 1 bis 5,
**dadurch gekennzeichnet, dass** die Fäden (5, 6) gegen eine Verschiebung durch ein Intermingeln der - glatten oder texturierten - Fäden (5, 6) relativ zueinander fixiert sind oder dass die Fixation der Fäden (5, 6) durch ein Intermingeln erhöht ist.

7. Klebeband (1) nach einem der Ansprüche 1 bis 6,
**dadurch gekennzeichnet, dass** die Fäden (5, 6) aus Polyester, Polyamid, Zellwolle und/oder Acetatseide bestehen.

8. Klebeband (1) nach einem der Ansprüche 1 bis 7,
**dadurch gekennzeichnet, dass** der Träger (2) vollständig aus Polyester, insbesondere aus Polyethylenterephtalat (PET), besteht.

9. Klebeband (1) nach einem der Ansprüche 1 bis 8,
**dadurch gekennzeichnet, dass** die Fadendichte der Querfäden (6) mindestens 30 Fäden (6) pro Zentimeter Länge (L) beträgt.

10. Klebeband (1) nach einem der Ansprüche 1 bis 9,
**dadurch gekennzeichnet, dass** der auf die Länge (L) bezogene Titer der Längsfäden (5) mindestens 2800 dtex/cm, vorzugsweise mindestens 2950 dtex/cm, beträgt.

11. Klebeband (1) nach einem der Ansprüche 1 bis 10,
**dadurch gekennzeichnet, dass** der auf die Länge (L) bezogene Titer der Querfäden (6) mindestens 5200 dtex/cm beträgt.

12. Klebeband (1) nach einem der Ansprüche 1 bis 11,
**dadurch gekennzeichnet, dass** die Stärke der Querfäden (6) im Bereich von 160 dtex bis 180 dtex liegt.

13. Klebeband (1) nach einem der Ansprüche 1 bis 12,
**dadurch gekennzeichnet, dass** die Stärke der Längsfäden (5) im Bereich von 80 dtex bis 100 dtex liegt.

14. Klebeband (1) nach einem der Ansprüche 1 bis 13,
**dadurch gekennzeichnet, dass** die Fäden (5, 6) Multifilamentfäden sind, wobei insbesondere Längsfäden (5) und Querfäden (6) mit unterschiedlicher Filamentanzahl miteinander kombiniert sind.

15. Klebeband (1) nach Anspruch 14,
**dadurch gekennzeichnet, dass** die Längsfäden (5) aus 16 bis 32 Filamenten pro Faden, vorzugsweise aus 22 bis 26 Filamenten pro Faden (5), bestehen.

16. Klebeband (1) nach Anspruch 14 oder 15,
**dadurch gekennzeichnet, dass** die Querfäden (6) aus 28 bis 44 Filamenten pro Faden, vorzugsweise aus 34 bis 38 Filamenten pro Faden (6), bestehen.

17. Klebeband (1) nach einem der Ansprüche 1 bis 16,
**dadurch gekennzeichnet, dass** die Längsfäden (5) glatt und die Querfäden (6) texturiert sind oder dass die Querfäden (6) glatt und die Längsfäden (5) texturiert sind.

18. Klebeband (1) nach einem der Ansprüche 1 bis 17,
**dadurch gekennzeichnet, dass** bei Einsatz texturierter oder glatter Längsfäden (5) und/oder Querfäden (6) in einem Polyestergewebe der Intermingelungsgrad im Bereich von 10 bis 300 Intermingelungspunkten pro laufenden Meter, insbesondere im Bereich von 80 bis 100 Intermingelungspunkten pro laufenden Meter, liegt.

19. Klebeband (1) nach einem der Ansprüche 1 bis 18,
**dadurch gekennzeichnet, dass** das Gewebe des Trägers (2) ein Flächengewicht im Bereich vom 70 bis 100 g/m², vorzugsweise von 73 bis 77 g/m², aufweist.

20. Klebeband (1) nach einem der Ansprüche 1 bis 19,
**dadurch gekennzeichnet, dass** der Klebstoff der Klebeschicht (3) ein druckempfindlicher selbstklebender Klebstoff, insbesondere ein Synthesekautschukkleber oder ein Acrylatklebstoff, ist.

21. Klebeband (1) nach einem der Ansprüche 1 bis 20,
**dadurch gekennzeichnet, dass** die Klebeschicht (3) mit einem spezifischen Flächengewicht von etwa 30 bis 100 g/m², vorzugsweise von etwa 40 bis 70 g/m², aufgetragen ist.

22. Klebeband (1) nach einem der Ansprüche 1 bis 21,
**dadurch gekennzeichnet, dass** die Oberseite des Trägers (2) mit einer Acrylatschicht versiegelt ist.

23. Klebeband (1) nach einem der Ansprüche 1 bis 22,
**gekennzeichne**t **durch** eine Dicke (D) im Bereich von 0,13 mm bis 0,25 mm, insbesondere im Bereich von 0,16 mm bis 0,22 mm.

24. Klebeband (1) nach einem der Ansprüche 1 bis 23,
**gekennzeichnet durch** mindestens eine Abriebklasse B gemäß LV 312 bei Messung an einem Dorn mit 5 mm Durchmesser.

25. Klebeband (1) nach einem der Ansprüche 1 bis 24,
**gekennzeichnet durch** mindestens eine Abriebklasse C gemäß LV 312 bei Messung an einem Dorn mit 10 mm Durchmesser.

26. Klebeband (1) nach einem der Ansprüche 1 bis 27,
**gekennzeichnet durch** eine Reißdehnung im Bereich von 15 % bis 25 %.

27. Klebeband (1) nach einem der Ansprüche 1 bis 28,
**gekennzeichnet durch** eine Reißfestigkeit im Bereich von 50 N/cm bis 110 N/cm, vorzugsweise von 65 N/cm bis 105 N/cm.

28. Klebeband (1) nach einem der Ansprüche 1 bis 27,
**dadurch gekennzeichnet, dass** die Klebkraft auf dem Bandrücken im Bereich von 2 bis 12 N/cm, vorzugsweise von 4 bis 7 N/cm, liegt.

29. Klebeband (1) nach einem der Ansprüche 1 bis 28,
**dadurch gekennzeichnet, dass** die Klebkraft auf Stahl im Bereich von 2 N/cm bis 12 N/cm, vorzugsweise von 5 N/cm bis 11 N/cm, liegt.

30. Klebeband (1) nach einem der Ansprüche 1 bis 29,
**dadurch gekennzeichnet, dass** die Abrollkraft im Bereich von 2 N/19 mm bis 10 N/19 mm, vorzugsweise von 3 N/19 mm bis 7 N/19 mm, liegt.

## Claims

1. A hand-tearable, fabric adhesive-tape (1), in particular a cable wrapping tape, comprising a tape-shaped support (2) and at least one adhesive layer (3) applied to one side of the support (2), wherein the support (2) is made of a fabric predominantly containing threads (5, 6) which on the one hand extend in the longitudinal direction of the adhesive tape (1) as longitudinal threads (5) with a thread density in the range between 30 and 50 threads per centimetre width (B) and on the other hand extend in the transverse direction of the adhesive tape (1) as transverse threads (6) with a thread density of at least 18 threads per centimetre length (L) and a count of at least 150 dtex, wherein a titre, related to the width (B), of the longitudinal threads (5) is smaller than a titre, related to the length (L), of the transverse threads (6),
**characterised in that** the titre, related to the width (B), of the longitudinal threads (5) is at least 2600 dtex/cm, the titre, related to the length (L), of the transverse threads (6) is at least 4700 dtex/cm and the thread density of the transverse threads (6) is at least 28 threads (6) per centimetre length (L), wherein the longitudinal threads (5) have a count of at least 65 dtex and the longitudinal threads (5) and the transverse threads (6) are, in addition to through the adhesive layer (3), additionally fixed against displacement relative to one another.

2. An adhesive tape (1) according to claim 1, **characterised in that** the threads (5, 6) are fixed relative to one another against displacement by the use of textured yarns as longitudinal threads (5) and/or transverse threads (6).

3. An adhesive tape (1) according to claim 1 or 2, **characterised in that** the threads (5, 6) are fixed relative to one another against displacement by calendering of the support (2).

4. An adhesive tape (1) according to any one of claims 1 to 3, **characterised in that** the threads (5, 6) are fixed relative to one another against displacement by an additional acrylate- or polyurethane coating of the support (2).

5. An adhesive tape (1) according to any one of claims 1 to 4, **characterised in that** the threads (5, 6) are fixed relative to one another against displacement by a finishing of the support (2).

6. An adhesive tape (1) according to any one of claims 1 to 5, **characterised in that** the threads (5, 6) are fixed relative to one against displacement by an intermingling of the - smooth or textured - threads (5, 6) or **in that** the fixation of the threads (5, 6) is increased by an intermingling.

7. An adhesive tape (1) according to any one of claims 1 to 6, **characterised in that** the threads (5, 6) are made of polyester, polyamide, rayon staple and/or acetate rayon.

8. An adhesive tape (1) according to any one of claims 1 to 7, **characterised in that** the support (2) is made completely of polyester, in particular polyethylene terephthalate (PET).

9. An adhesive tape (1) according to any one of claims 1 to 8, **characterised in that** the thread density of the transverse threads (6) is at least 30 threads (6) per centimetre length (L).

10. An adhesive tape (1) according to any one of claims 1 to 9, **characterised in that** the titre, related to the length (L), of the longitudinal threads (5) is at least 2800 dtex/cm, preferably at least 2950 dtex/cm.

11. An adhesive tape (1) according to any one of claims 1 to 10, **characterised in that** the titre, related to the length (L), of the transverse threads (6) is at least 5200 dtex/cm.

12. An adhesive tape (1) according to any one of claims 1 to 11, **characterised in that** the count of the transverse threads (6) lies in the range from 160 dtex to 180 dtex.

13. An adhesive tape (1) according to any one of claims 1 to 12, **characterised in that** the count of the longitudinal threads (5) lies in the range from 80 dtex to 100 dtex.

14. An adhesive tape (1) according to any one of claims 1 to 13, **characterised in that** the threads (5, 6) are multifilament threads, wherein in particular longitudinal threads (5) and transverse threads (6) with a differing number of filaments are combined with one another.

15. An adhesive tape (1) according to claim 14, **characterized in that** the longitudinal threads (5) are made up of 16 to 32 filaments per thread, preferably 22 to 26 filaments per thread (5).

16. An adhesive tape (1) according to claim 14 or 15, **characterised in that** the transverse threads (6) are made up of 28 to 44 filaments per thread, preferably 34 to 38 filaments per thread (6).

17. An adhesive tape (1) according to any one of claims 1 to 16, **characterised in that** the longitudinal threads (5) are smooth and the transverse threads (6) are textured or **in that** the transverse threads (6) are smooth and the longitudinal threads (5) are textured.

18. An adhesive tape (1) according to any one of claims 1 to 17, **characterised in that** when textured or smooth longitudinal threads (5) and/or transverse threads (6) are used in a polyester fabric, the intermingling level lies in the range from 10 to 300 intermingling points per linear meter, in particular in the range from 80 to 100 intermingling points per linear meter.

19. An adhesive tape (1) according to any one of claims 1 to 18, **characterised in that** the fabric of the support (2) has a weight per unit area in the range from 70 to 100 g/m², preferably from 73 to 77 g/m².

20. An adhesive tape (1) according to any one of claims 1 to 19, **characterised in that** the adhesive of the adhesive layer (3) is a pressure-sensitive, self-adhesive adhesive, in particular a synthetic rubber adhesive or an acrylate adhesive.

21. An adhesive tape (1) according to any one of claims 1 to 20, **characterised in that** the adhesive layer (3) is applied with a specific weight per unit area from approximately 30 to 100 g/m², preferably from approximately 40 to 70 g/m².

22. An adhesive tape (1) according to any one of claims 1 to 21, **characterised in that** the top side of the support (2) is sealed with a acrylate layer.

23. An adhesive tape (1) according to any one of claims 1 to 22, **characterised by** a thickness (D) in the range from 0.13 mm to 0.25 mm, in particular in the range from 0.16 mm to 0.22 mm.

24. An adhesive tape (1) according to any one of claims 1 to 23, **characterised by** at least an abrasion class B according to LV 312 upon measurement at a mandrel of 5 mm diameter.

25. An adhesive tape (1) according to any one of claims 1 to 24, **characterised by** at least an abrasion class C according to LV 312 upon measurement at a mandrel of 10 mm diameter.

26. An adhesive tape (1) according to any one of claims 1 to 27, **characterised by** an elongation at tear in the range from 15% to 25%.

27. An adhesive tape (1) according to any one of claims 1 to 28, **characterised by** a resistance to tearing in the range from 50 N/cm to 110 N/cm, preferably from 65 N/cm to 105 N/cm.

28. An adhesive tape (1) according to any one of claims 1 to 27, **characterised in that** the adhesive force on the tape back lies in the range from 2 to 12 N/cm, preferably from 4 to 7 N/cm.

29. An adhesive tape (1) according to any one of claims 1 to 28, **characterised in that** the adhesive force on steel lies in the range from 2 N/cm to 12 N/cm, preferably from 5 N/cm to 11 N/cm.

30. An adhesive tape (1) according to any one of claims 1 to 29, **characterised in that** the unrolling force lies in the range from 2 N / 19 mm to 10 N/19 mm, preferably from 3 N/19 mm to 7 N/19 mm*.*

## Revendications

1. Bande adhésive de tissu pouvant être déchirée à la main (1), en particulier bande d'enroulement de câble, comprenant un support en forme de bande (2), et au moins une couche de colle (3) appliquée sur un côté du support (2), le support (2) se composant d'un tissu qui contient principalement des fils (5, 6) qui s'étendent d'un côté comme des fils longitudinaux (5) avec une compacité de fils située dans une plage comprise entre 30 et 50 fils par centimètre de largeur (B) dans le sens longitudinal de la bande adhésive (1) et de l'autre côté comme des fils transversaux (6) avec une compacité de fils d'au moins 18 fils par centimètre de longueur (L) et une épaisseur d'au moins 150 dtex dans le sens transversal de la bande adhésive (1), dans lequel un titre relatif à la largeur (B) des fils longitudinaux (5) est inférieur à un titre relatif à la longueur (L) des fils transversaux (6),
**caractérisée en ce que** le titre relatif à la largeur (B) des fils longitudinaux (5) s'élève au moins à 2 600 dtex/cm, le titre relatif à la longueur (L) des fils transversaux (6) s'élève au moins à 4 700 dtex/cm et la compacité des fils transversaux (6) s'élève au moins à 28 fils (6) par centimètre de longueur (L), les fils longitudinaux (5) présentant une épaisseur d'au moins 65 dtex et les fils longitudinaux (5) et les fils transversaux (6) étant en outre fixés à part par la couche de colle (3) contre tout déplacement les uns par rapport aux autres.

2. Bande adhésive (1) selon la revendication 1, **caractérisée en ce que** les fils (5, 6) sont fixés contre tout déplacement des uns par rapport aux autres par l'insertion de fils texturés comme fils longitudinaux (5) et/ou transversaux (6).

3. Bande adhésive (1) selon la revendication 1 ou 2, **caractérisée en ce que** les fils (5, 6) sont fixés contre tout déplacement des uns par rapport aux autres par un calandrage du support (2).

4. Bande adhésive (1) selon l'une quelconque des revendications 1 à 3, **caractérisée en ce que** les fils (5, 6) sont fixés contre tout déplacement des uns par rapport aux autres par un revêtement d'acrylate ou de polyuréthane supplémentaire du support (2).

5. Bande adhésive (1) selon l'une quelconque des revendications 1 à 4, **caractérisée en ce que** les fils (5, 6) sont fixés contre tout déplacement des uns par rapport aux autres par un apprêtage du support (2).

6. Bande adhésive (1) selon l'une quelconque des revendications 1 à 5, **caractérisée en ce que** les fils (5, 6) sont fixés contre tout déplacement des uns par rapport aux autres par un entrelacement des fils (5, 6) - lisses ou texturés - ou **en ce que** la fixation des fils (5, 6) est augmentée par un entrelacement.

7. Bande adhésive (1) selon l'une quelconque des revendications 1 à 6, **caractérisée en ce que** les fils (5, 6) sont en polyester, en polyamide, en Fibranne et/ou en rayonne d'acétate.

8. Bande adhésive (1) selon l'une quelconque des revendications 1 à 7, **caractérisée en ce que** le support (2) se compose entièrement de polyester, en particulier de polytéréphtalate d'éthylène (PET).

9. Bande adhésive (1) selon l'une quelconque des revendications 1 à 8, **caractérisée en ce que** la compacité des fils transversaux (6) s'élève au moins à 30 fils (6) par centimètre de longueur (L).

10. Bande adhésive (1) selon l'une quelconque des revendications 1 à 9, **caractérisée en ce que** le titre relatif à la longueur (L) des fils longitudinaux (5) s'élève au moins à 2 800 dtex/cm, de préférence au moins à 2 950 dtex/cm.

11. Bande adhésive (1) selon l'une quelconque des revendications 1 à 10, **caractérisée en ce que** le titre relatif à la longueur (L) des fils transversaux (6) s'élève au moins à 5 200 dtex/cm.

12. Bande adhésive (1) selon l'une quelconque des revendications 1 à 11, **caractérisée en ce que** l'épaisseur des fils transversaux (6) se situe dans une plage comprise entre 160 dtex et 180 dtex.

13. Bande adhésive (1) selon l'une quelconque des revendications 1 à 12, **caractérisée en ce que** l'épaisseur des fils longitudinaux (5) se situe dans une plage comprise entre 80 dtex et 100 dtex.

14. Bande adhésive (1) selon l'une quelconque des revendications 1 à 13, **caractérisée en ce que** les fils (5, 6) sont des fils multifilaments, en particulier des fils longitudinaux (5), et **en ce que** des fils transversaux (6) avec un nombre différent de filaments sont combinés entre eux.

15. Bande adhésive (1) selon la revendication 14, **caractérisée en ce que** les fils longitudinaux (5) se composent de 16 à 32 filaments par fil, de préférence de 22 à 26 filaments par fil (5).

16. Bande adhésive (1) selon la revendication 14 ou 15, **caractérisée en ce que** les fils transversaux (6) se composent de 28 à 44 filaments par fil, de préférence de 34 à 38 filaments par fil (6).

17. Bande adhésive (1) selon l'une quelconque des revendications 1 à 16, **caractérisée en ce que** les fils longitudinaux (5) sont lisses et les fils transversaux (6) sont texturés ou **en ce que** les fils transversaux (6) sont lisses et les fils longitudinaux (5) sont texturés.

18. Bande adhésive (1) selon l'une quelconque des revendications 1 à 17, **caractérisée en ce que** lors de l'utilisation de fils longitudinaux (5) et/ou de fils transversaux (6) texturés ou lisses dans un tissu de polyester, le degré d'entrelacement se situe dans une plage comprise entre 10 et 300 points d'entrelacement par mètre courant, en particulier dans la plage comprise entre 80 et 100 points d'entrelacement par mètre courant.

19. Bande adhésive (1) selon l'une quelconque des revendications 1 à 18, **caractérisée en ce que** le tissu du support (2) présente un grammage situé dans la plage comprise entre 70 et 100 g/m², de préférence entre 73 et 77 g/m².

20. Bande adhésive (1) selon l'une quelconque des revendications 1 à 19, **caractérisée en ce que** la colle de la couche de colle (3) est une colle autocollante sensible à la pression, en particulier une colle de caoutchouc synthétique ou une colle d'acrylate.

21. Bande adhésive (1) selon l'une quelconque des revendications 1 à 20, **caractérisée en ce que** la couche de colle (3) présentant un grammage spécifique d'environ 30 à 100 g/m², de préférence d'environ 40 à 70 g/m² est appliquée.

22. Bande adhésive (1) selon l'une quelconque des revendications 1 à 21, **caractérisée en ce que** le côté supérieur du support (2) est revêtu d'une couche d'acrylate.

23. Bande adhésive (1) selon l'une quelconque des revendications 1 à 22, **caractérisée par** une épaisseur (D) située dans une plage comprise entre 0,13 et 0,25 mm, en particulier dans la plage comprise entre 0,16 et 0,22 mm.

24. Bande adhésive (1) selon l'une quelconque des revendications 1 à 23, **caractérisée par** au moins une classe d'abrasion B selon la norme LV 312 lors de la mesure sur une broche de 5 mm de diamètre.

25. Bande adhésive (1) selon l'une quelconque des revendications 1 à 24, **caractérisée par** au moins une classe d'abrasion C selon la norme LV 312 lors de la mesure sur une broche de 10 mm de diamètre.

26. Bande adhésive (1) selon l'une quelconque des revendications 1 à 27, **caractérisée par** un allongement compris dans une plage allant de 15 à 25 %.

27. Bande adhésive (1) selon l'une quelconque des revendications 1 à 28, **caractérisée par** une résistance à la rupture compris dans une plage allant de 50 à 110 N/cm, de préférence de 65 à 105 N/cm.

28. Bande adhésive (1) selon l'une quelconque des revendications 1 à 27, **caractérisée en ce que** le pouvoir adhésif sur le dos de la bande se situe dans une plage comprise entre 2 et 12 N/cm, de préférence 4 et 7 N/cm.

29. Bande adhésive (1) selon l'une quelconque des revendications 1 à 28, **caractérisée en ce que** le pouvoir adhésif sur l'acier se situe dans une plage comprise entre 2 et 12 N/cm, de préférence 5 et 11 N/cm.

30. Bande adhésive (1) selon l'une quelconque des revendications 1 à 29, **caractérisée en ce que** la force de déroulement se situe dans une plage comprise entre 2 N / 19 mm et 10 N / 19 mm, de préférence 3 N / 19 mm et 7 N / 19 mm.
